# EUROPEAN PATENT APPLICATION

(11) **EP 4 711 925 A1**
(43) Date of publication of application: **18.03.2026**
(21) Application number: 24220005.3
(22) Date of filing: 13.12.2024
(51) Int. Cl.: G06F 9/54, G06F 13/28, G06F 16/13, G06F 16/14, G06F 16/172

(54) **FILE ACCESS METHODS AND APPARATUSES**

(30) Priority: 11.09.2024 CN 202411276575
(71) Applicant: Alipay (Hangzhou) Information Technology Co., Ltd., Hangzhou, Zhejiang 310000 (CN)
(72) Inventor: LIU, Jian, Hangzhou, Zhejiang, 310000 (CN); GU, Shuwei, Hangzhou, Zhejiang, 310000 (CN); ZHAN, Xiaojun, Hangzhou, Zhejiang, 310000 (CN); RUAN, Ruoyi, Hangzhou, Zhejiang, 310000 (CN)
(74) Representative: Fish & Richardson P.C.

(57) **Abstract**

A file access method is applied to a computing node for executing a computing task. A user-space file system that runs in user space is mounted on a system kernel of the computing node. A first process adaptation program is implemented in a first user-space process corresponding to the computing task. A second process adaptation program is implemented in a second user-space process corresponding to the user-space file system. The method includes: The first process adaptation program intercepts an access request of the first user-space process for the user-space file system; the first process adaptation program transmits the access request to the second process adaptation program in the user space, and the second process adaptation program submits the access request to the second user-space process; and the second process adaptation program intercepts an access result generated by performing access processing on the user-space file system by the second user-space process, and transmits the access result to the first process adaptation program in the user space, and the first process adaptation program submits the access result to the first user-space process.

## Description

### TECHNICAL FIELD

Embodiments of this specification pertain to the field of artificial intelligence technologies, and in particular, relate to file access methods and apparatuses.

### BACKGROUND

With rapid development of a large language model (LLM), a data amount related to the LLM model rapidly expands, and demands for storing and reading/writing the data continuously change. For example, the LLM model usually includes billions or even tens of billions of parameters. Therefore, in addition to storing data needed for inference, a large quantity of storage resources are needed to store these model parameters. In addition, during running of the LLM model, data reading and writing usually need to be performed at a high speed, so that data can be quickly processed in an inference phase. In this case, an existing storage system needs to be optimized to ensure that the LLM model can quickly access the needed data.

On this basis, changes in demands for data storage and reading/writing inevitably pose new challenges to I/O performance of the existing storage system.

### SUMMARY

This specification provides a file access method, which is applied to a computing node for executing a computing task. A user-space file system that runs in user space is mounted on a system kernel of the computing node. The user-space file system is configured to store a file related to the computing task. A first process adaptation program is implemented in a first user-space process corresponding to the computing task. A second process adaptation program is implemented in a second user-space process corresponding to the user-space file system. The method includes:

The first process adaptation program intercepts an access request for the user-space file system triggered during the execution of the first user-space process user-space.

The first process adaptation program transmits the access request to the second process adaptation program in the user space in response to the intercepted access request, and the second process adaptation program further submits the access request to the second user-space process, so that the second user-space process executes the access request to perform access processing on the user-space file system.

The second process adaptation program intercepts an access result generated by performing access processing on the user-space file system by the second user-space process, and transmits the access result to the first process adaptation program in the user space, and the first process adaptation program further submits the access result to the first user-space process, so that the first user-space process completes the computing task based on the access result.

Optionally, execution code running in the first user-space process includes a first function used to initiate a system call to the system kernel to access the user-space file system; and correspondingly, the first process adaptation program includes a second function used to access the user-space file system in the user space.

That the first process adaptation program intercepts an access request for the user-space file system triggered during the execution of the first user-space process includes: replacing the first function with the second function in response to a call initiated to the first function during the execution of the first user-space process, so that the first user-space process further initiates a call to the second function, and submits the access request for the user-space file system triggered during the execution to the first process adaptation program as a call parameter.

That the first process adaptation program transmits the access request to the second process adaptation program in the user space includes:

The first process adaptation program executes the second function, and transmits the access request to the second process adaptation program in the user space.

Optionally, execution code running in the second user-space process includes a third function used to initiate a system call to the system kernel to return the access result for the user-space file system to the first user-space process; and correspondingly, the second process adaptation program includes a fourth function used to return the access result for the user-space file system to the first user-space process in the user space.

That the second process adaptation program intercepts an access result generated by performing access processing on the user-space file system by the second user-space process includes: replacing the third function called by the second user-space process with the fourth function in response to that the second user-space process calls the third function during the execution, so that the second user-space process further initiates a call to the fourth function, and submits the access result generated by performing access processing on the user-space file system to the second process adaptation program as a call parameter.

That the second process adaptation program transmits the access result to the first process adaptation program in the user space includes:

The second process adaptation program executes the fourth function, and transmits the access result to the first process adaptation program in the user space.

Optionally, that the first process adaptation program transmits the access request to the second process adaptation program in the user space includes:

The first process adaptation program transmits the access request to the second process adaptation program in the user space through memory sharing.

That the second process adaptation program transmits the access result to the first process adaptation program in the user space includes:

The second process adaptation program transmits the access result to the first process adaptation program in the user space through memory sharing.

Optionally, the access request includes a read request for a target file stored in the user-space file system; and correspondingly, the access result includes the target file read from the user-space file system.

Alternatively, the access request includes a write request for writing a target file into the user-space file system; and correspondingly, the access result includes a write result of writing the target file into the user-space file system.

Optionally, the file stored in the user-space file system is a file block including several files.

Optionally, the user-space file system is connected to a storage system configured to store the file related to the computing task; and an RDMA connection is established between the user-space file system and the storage system.

The method further includes: synchronizing the file related to the computing task from the storage system to the user-space file system for storage based on the RDMA connection before the computing node executes the computing task.

Optionally, an operating system used by the computing node is a Linux system; and the process adaptation program is an adaptor implemented in the user-space process based on an LD_PRELOAD mechanism supported by the Linux system.

Optionally, the user-space file system is a user-space file system created based on a libfuse library provided by a Linux system; and the user-space file system is mounted to the Linux system by using a FUSE kernel module of the Linux system.

Optionally, the computing task is a training task for training an LLM model or an inference task for performing logical inference based on an LLM model.

Optionally, the user-space file system is a file system implemented based on a flash memory mounted on the computing node.

Optionally, the user-space file system is a distributed file system implemented based on flash memories mounted on computing nodes for jointly executing the computing task in a computing node cluster.

This specification further provides a file access apparatus, which is applied to a computing node for executing a computing task. A user-space file system that runs in user space is mounted on a system kernel of the computing node. The user-space file system is configured to store a file related to the computing task. A first process adaptation program is implemented in a first user-space process corresponding to the computing task. A second process adaptation program is implemented in a second user-space process corresponding to the user-space file system. The apparatus includes: a first interception module, where the first process adaptation program intercepts an access request for the user-space file system triggered during the execution of the first user-space process; a first transmission module, where the first process adaptation program transmits the access request to the second process adaptation program in the user space in response to the intercepted access request, and the second process adaptation program further submits the access request to the second user-space process, so that the second user-space process executes the access request to perform access processing on the user-space file system; a second interception module, where the second process adaptation program intercepts an access result generated by performing access processing on the user-space file system by the second user-space process; and a second transmission module, where the second process adaptation program transmits the access result to the first process adaptation program in the user space, and the first process adaptation program further submits the access result to the first user-space process, so that the first user-space process completes the computing task based on the access result.

In the above-mentioned embodiments, a process adaptation program is implemented in each of a user-space process corresponding to a computing task and a user-space process corresponding to a user-space file system mounted on a system kernel, so that when the user-space process corresponding to the computing task accesses the user-space file system, access interaction for the user-space file system can be completed in user space by using the implemented process adaptation program, and calls to the system kernel no longer need to be initiated. This can optimize an access link to the user-space file system, significantly reduce a quantity of calls to the system kernel, and lower system overheads, thereby improving access performance of accessing the user-space file system.

### BRIEF DESCRIPTION OF DRAWINGS

To describe the technical solutions in the embodiments of this specification more clearly, the following briefly describes the accompanying drawings needed for describing the embodiments. Clearly, the accompanying drawings in the following description are merely some embodiments of this specification, and a person of ordinary skill in the art can still other drawings from these accompanying drawings without creative efforts.
FIG. 1 is an interaction diagram illustrating a computing node accessing a user-space file system by using a system kernel, according to some embodiments of this specification;
FIG. 2 is a flowchart illustrating a file access method, according to some embodiments of this specification;
FIG. 3 is an interaction diagram illustrating a computing node accessing a user-space file system in user space, according to some embodiments of this specification;
FIG. 4 is a schematic structural diagram illustrating an electronic device, according to some embodiments of this specification; and
FIG. 5 is a block diagram illustrating a file access apparatus, according to some embodiments of this specification.

### DESCRIPTION OF EMBODIMENTS

To make a person skilled in the art better understand the technical solutions in this specification, the following clearly and comprehensively describes the technical solutions in the embodiments of this specification with reference to the accompanying drawings in the embodiments of this specification. Clearly, the described embodiments are merely some but not all of the embodiments of this specification. All other embodiments obtained by a person of ordinary skill in the art based on the embodiments of this specification without creative efforts shall fall within the protection scope of this specification.

In practice, when a computing node executes a computing task such as a training task for an LLM model or an inference task based on an LLM model, to implement high-speed data access to a file related to the computing task, a user-space file system that runs in user space is usually implemented on the computing node as a cache layer based on a storage resource mounted on the computing node, and the user-space file system is mounted on a system kernel of the computing node.

Before the computing node starts to execute the computing task, the computing node can cache the file related to the computing task into the user-space file system in advance. When the computing node starts to execute the computing task, if a user-space process corresponding to the computing task needs to access the user-space file system, access to the user-space file system can be initiated by using the system kernel of the computing node as a forwarder.

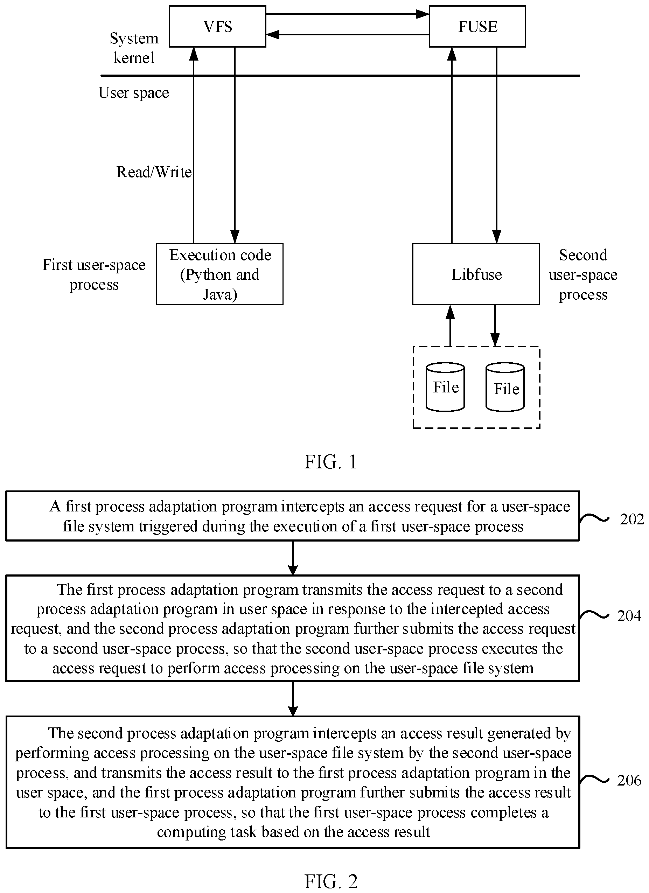

FIG. 1 is an interaction diagram illustrating a computing node accessing a user-space file system by using a system kernel.

As shown in FIG. 1, for example, an operating system used by the computing node is a Linux system. In the Linux system, the user-space file system can be a user-space file system created based on a libfuse library provided by the Linux system; and the user-space file system can be mounted to the Linux system by using a FUSE kernel module of the Linux system.

In user space of the Linux system, a first user-space process corresponding to a computing task can be run, and a second user-space process corresponding to the user-space file system can be further run. The first user-space process usually can be configured to execute the computing task. The second user-space process usually can be configured to manage the user-space file system.

In a process in which the first user-space process corresponding to the computing task executes execution code related to the computing task, if a file stored in the user-space file system needs to be accessed, the user-space file system usually can be accessed by calling a system function in the system kernel.

For example, an access behavior of the first user-space process to the user-space file system usually can include a read behavior for the file stored in the user-space file system and a write behavior for writing a file into the user-space file system. The system function can include a read function and a write function. When the first user-space process needs to read the file stored in the user-space file system, a read operation on the file stored in the user-space file system can be initiated by calling the read function in the system kernel. When the first user-space process needs to write a file into the user-space file system, an operation of writing a file into the user-space file system can be initiated by calling the write function in the system kernel.

Referring back to FIG. 1, an access scenario in which the first user-space process reads the file stored in the user-space file system is used as an example. In an access link to the user-space file system shown in FIG. 1, when the first user-space process calls the read function in the system kernel, a read request (that is, a call request for the read function) usually needs to be forwarded to a kernel-space FUSE module in the system kernel by using a virtual filesystem (VFS) layer in the system kernel.

After the FUSE module receives the read request, if a size of the read request exceeds that of a single request that can be processed by the system kernel, the read request usually continues to be split into a plurality of read requests. For example, a default size of a single request that can be processed and that is supported by the system kernel of the Linux system is usually 128K. In this case, the FUSE module further splits the received read request into a plurality of read requests of a 128K size.

Then, the FUSE module can continue to send the read request obtained through splitting to the user-space file system that is created based on the libfuse library and that runs in the user space. After receiving the read request sent by the FUSE module, the second user-space process corresponding to the user-space file system can call implementation logic in the user-space file system to implement file reading, and then return the read file to the kernel-space FUSE module in the system kernel based on the same link. The FUSE module continues to return the read file to the VFS layer in the system kernel, and finally, the VFS layer returns the read file to the first user-space process.

The first user-space process and the second user-space process can continuously repeat the above-mentioned interaction process until all the read requests obtained through splitting are processed.

However, in the above-mentioned solution, each read request obtained through splitting needs to pass through the system kernel, and needs to be processed for a plurality of times in kernel space and forwarded for a plurality of times before being sent to the user-space file system located in the user space, resulting in a problem of excessively high system overheads. For example, if the read request is a read request for a single large file, for example, a read request for a large file of a 128MB size, and if splitting is performed based on the default size 128K of the single request that can be processed and that is supported by the system kernel of the Linux system, the read request is split into 1024 read sub-requests. All of the 1024 read requests pass through the system kernel, are processed for a plurality of times in the kernel space, are forwarded for a plurality of times, and then are sent to the user-space file system located in the user space, clearly resulting in a large quantity of system overheads.

In addition, because the finally read file needs to be copied for a plurality of times between the user space and the kernel space before being finally returned to the first user-space process located in the user space, there is clearly a problem of an excessively high file access delay, affecting performance of accessing the user-space file system.

Based on this, this specification provides a technical solution in which a system kernel can be bypassed to complete access to a user-space file system in user space.

In implementation, a first process adaptation program can be implemented in a first user-space process corresponding to a computing task, and a second process adaptation program can be implemented in a second user-space process corresponding to the user-space file system.

During the execution of the first user-space process, the first process adaptation program can intercept an access request for the user-space file system triggered during the execution of the first user-space process, and then transmit the access request to the second process adaptation program in the user space.

After receiving the access request transmitted by the first process adaptation program in the user space, the second process adaptation program can submit the access request to the second user-space process, and the second user-space process continues to execute the access request to perform access processing on the user-space file system.

In a process in which the second user-space process executes the access request, the second process adaptation program can intercept an access result generated by performing access processing on the user-space file system by the second user-space process, and then transmit the access result to the first process adaptation program in the user space based on a same link.

After receiving the access result transmitted by the second process adaptation program in the user space, the first process adaptation program can further submit the access result to the first user-space process, so that the first user-space process completes the computing task based on the access result.

In the above-mentioned technical solution, a process adaptation program is implemented in each of a user-space process corresponding to a computing task and a user-space process corresponding to a user-space file system mounted on a system kernel, so that when the user-space process corresponding to the computing task accesses the user-space file system, access interaction for the user-space file system can be completed in user space by using the implemented process adaptation program, and calls to the system kernel no longer need to be initiated. This can optimize an access link to the user-space file system, significantly reduce a quantity of calls to the system kernel, and lower system overheads, thereby improving access performance of accessing the user-space file system.

FIG. 2 is a flowchart illustrating a file access method, according to this specification. The method is applied to a computing node for executing a computing task. A user-space file system that runs in user space is mounted on a system kernel of the computing node. The user-space file system is configured to store a file related to the computing task. A first process adaptation program is implemented in a first user-space process corresponding to the computing task. A second process adaptation program is implemented in a second user-space process corresponding to the user-space file system. The method includes the following execution process.

Step 202: The first process adaptation program intercepts an access request for the user-space file system triggered during the execution of the first user-space process.

The computing task can specifically include a large-scale computing task of a task type. For example, in a shown implementation, the computing task can specifically include a training task for training an LLM model, an inference task for performing logical inference based on the LLM model, etc.

The computing node can be a physical node configured to execute the computing task, or can be a virtual node. For example, in practice, a large-scale computing task such as the training task for the LLM model or the inference task based on the LLM model usually needs to be executed by a large-scale computing cluster deployed in a distributed manner. The computing cluster can further specifically include several stations distributed in different regions. The computing node can be specifically a physical device deployed in each station, or a virtual device (for example, a virtual machine) obtained by further virtualizing a physical device. In this scenario, a computing task executed by each computing node can be a sub-task obtained by splitting, based on a quantity of computing nodes, a computing task jointly executed by computing nodes in the computing cluster.

In practice, to implement high-speed data access to a file related to the computing task, a user-space file system that runs in user space can be implemented on the computing node as a cache layer based on a storage resource mounted on the computing node, and the user-space file system can be mounted on a system kernel of the computing node.

For example, in a shown implementation, an operating system mounted on the computing node is a Linux system. In the Linux system, the user-space file system can be a user-space file system created based on a libfuse library provided by the Linux system; and the user-space file system can be mounted to the Linux system by using a FUSE kernel module of the Linux system.

It is worthwhile to note that a type of the storage resource used for the user-space file system implemented on the computing node is not specifically limited in this specification.

In a shown implementation, the storage resource mounted on the computing node usually can include a flash memory. In this case, the user-space file system can be implemented on the computing node by using the flash memory mounted on the computing node.

For example, in practice, a GPU is usually mounted on the computing node to execute a large-scale computing task such as the training task for the LLM model or the inference task based on the LLM model. In this case, the GPU can be directly connected to the flash memory (for example, a solid-state disk (SSD)) running an NVMe protocol, so that the file stored in the user-space file system can be directly transferred by the GPU from the flash memory to a memory of the GPU without passing through a CPU and a system memory.

In this manner, a feature of a high read/write rate of the flash memory can be fully used, to improve overall access performance of the user-space file system.

In a shown implementation, for a large-scale computing task, the computing task usually needs to be jointly executed by using a computing node cluster. In this case, the user-space file system can be specifically a distributed user-space file system implemented based on storage resources mounted on computing nodes in the computing node cluster.

For example, the computing task is still executed by using a large-scale computing cluster deployed in a distributed manner. In practice, the computing cluster can specifically further include several stations distributed in different regions, and each station can further include several physical devices or virtual devices serving as computing nodes. In this case, for each station, a distributed user-space file system can be implemented in the station based on storage resources mounted on the several physical devices or virtual devices serving as computing nodes in the station.

After the user-space file system is implemented on the computing node based on the storage resource mounted on the computing node, before starting to execute the computing task, the computing node can cache the file related to the computing task into the user-space file system in advance.

In a shown implementation, the user-space file system implemented on the computing node can be used as a cache layer to be connected to a storage system configured to store the file related to the computing task. An RDMA connection can be pre-established between the storage system and the user-space file system as a high-speed data transmission channel. Then, before executing the computing task, the computing node can synchronize, based on the established RDMA connection, the file related to the computing task from the storage system to the user-space file system for caching.

It is worthwhile to note that a specific implementation process of pre-establishing the RDMA connection between the storage system and the user-space file system is not described in detail in this specification. A person skilled in the art can refer to records of a related technology. Certainly, in addition to pre-establishing the RDMA connection between the storage system and the user-space file system as a high-speed data transmission channel, in practice, another form of connection that supports high-speed data transmission can be established as a data transmission channel. No enumerations are provided one by one in this specification.

In a shown implementation, to improve file access efficiency, the file stored in the user-space file system can be specifically a file block including several small files. That is, in practice, small files stored in the user-space file system can be aggregated into a form of a file block, and the file block is used as a smallest storage unit for storage and maintenance.

For example, in practice, the user-space file system can specifically define a common file block format of a fixed size. After the file related to the computing task is synchronized from the storage system, the synchronized small file can be encapsulated into a file block of a fixed size based on the file block format, and then the file is stored and maintained in the common file block form.

It is worthwhile to note that in practice, the storage system connected to the user-space file system can be specifically a distributed storage system.

For example, the computing task is still executed by using a large-scale computing cluster deployed in a distributed manner. In practice, the computing cluster can specifically further include several stations distributed in different regions, and each station can further include several physical devices or virtual devices serving as computing nodes. In this case, the storage system can be a distributed storage system implemented based on a storage resource mounted on each station.

In this specification, when the computing node starts to execute the computing task, if the first user-space process corresponding to the computing task needs to access the user-space file system, access to the user-space file system usually can be initiated by using the system kernel of the computing node as a forwarder. In this specification, an access link to the user-space file system can be optimized for the first user-space process, so that the first user-space process can directly access the user-space file system in the user space.

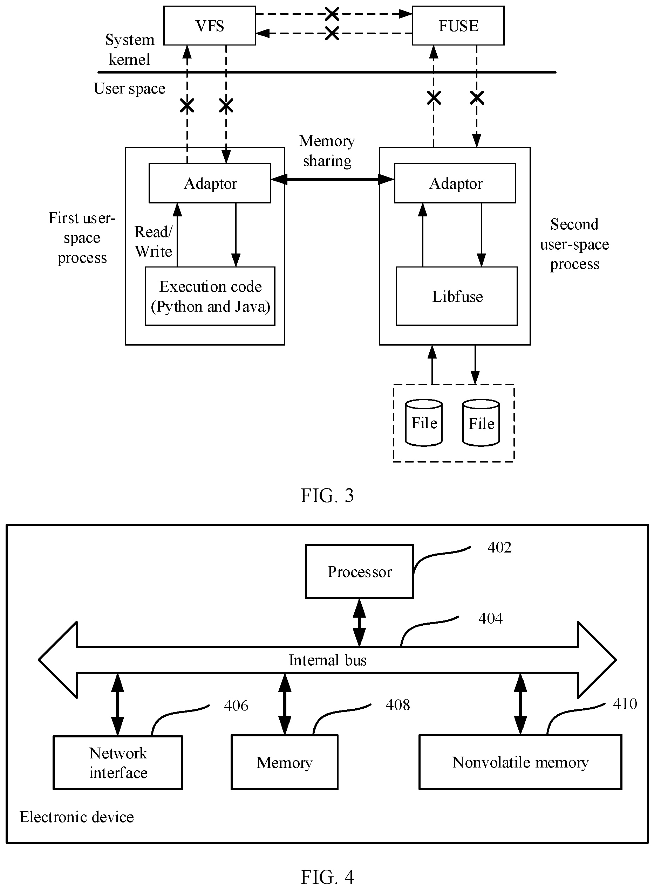

FIG. 3 is an interaction diagram illustrating a computing node accessing a user-space file system in user space, according to this specification.

As shown in FIG. 3, a first process adaptation program can be implemented in a first user-space process corresponding to a computing task, and a second process adaptation program can be implemented in a second user-space process corresponding to the user-space file system.

The first process adaptation program can be specifically configured to intercept an access request for the user-space file system triggered during the execution of the first user-space process, and transmit the intercepted access request to the second process adaptation program in the user space. The second process adaptation program can be specifically configured to intercept an access result generated by performing access processing on the user-space file system by the second user-space process, and transmit the access result to the first process adaptation program in the user space.

It is worthwhile to note that in practice, a process adaptation program can be specifically implemented in a user-space process in a manner of performing functional extension on the user-space process by loading a shared library for the user-space process without modifying execution code included in the original user-space process.

For example, as shown in FIG. 3, an operating system used by the computing node is a Linux system. In this case, the process adaptation program can be specifically an adaptor created in the user-space process based on an LD_PRELOAD mechanism supported by the Linux system.

The LD_PRELOAD mechanism supported by the Linux system is a mechanism for performing functional extension on a user-space process by loading a shared library for the user-space process without modifying execution code included in the original user-space process. A specific implementation process of creating the adaptor in the user-space process based on the LD_PRELOAD mechanism is not described in detail in this specification. A person skilled in the art can refer to records of a related technology.

Referring back to FIG. 3, when the computing node starts to execute the computing task, during the execution of the first user-space process, the first process adaptation program can intercept the access request for the user-space file system triggered during the execution of the first user-space process.

When the first process adaptation program intercepts the access request for the user-space file system triggered during the execution of the first user-space process, a system function, in the system kernel, originally called by the first process adaptation program can be specifically replaced with a user-space function for implementation.

For example, in a shown implementation, execution code running in the first user-space process usually can include a first function used to initiate a system call to the system kernel to access the user-space file system. To enable the first user-space process to initiate access to the user-space file system without passing through the system kernel, the first process adaptation program can include a second function implemented to access the user-space file system in the user space.

In this case, during the execution of the first user-space process, when the first process adaptation program detects that the first user-space process initiates a call to the first function during the execution, the first function can be replaced with the second function in response to the call initiated to the first function during the execution of the first user-space process, so that the first user-space process can further initiate a call to the second function, and submit the access request for the user-space file system triggered during the execution to the first process adaptation program as a call parameter, to complete interception of the access request of the first user-space process for the user-space file system.

It is worthwhile to note that the access request of the first user-space process for the user-space file system can be specifically a read request for a target file stored in the user-space file system, or can be a write request for writing a target file into the user-space file system. Implementations are not specifically limited in this specification.

For example, when the access request of the first user-space process for the user-space file system is the read request for the target file stored in the user-space file system, the first function can be a kernel-space read function, and the second function can be a user-space read function implemented in the first process adaptation program. When the access request of the first user-space process for the user-space file system is the write request for writing the target file into the user-space file system, the first function can be a kernel-space write function, and the second function can be a user-space write function implemented in the first process adaptation program.

Step 104: The first process adaptation program transmits the access request to the second process adaptation program in the user space in response to the intercepted access request, and the second process adaptation program further submits the access request to the second user-space process, so that the second user-space process executes the access request to perform access processing on the user-space file system.

Referring back to FIG. 3, after intercepting the access request of the first user-space process for the user-space file system, the first process adaptation program can further transmit the access request to the second process adaptation program in the user space.

For example, in a shown implementation, after intercepting the access request of the first user-space process for the user-space file system by replacing the first function with the second function, the first process adaptation program can continue to execute the second function in the user space, and transmit the access request to the second process adaptation program in the user space.

It is worthwhile to note that a specific transmission manner used when the first process adaptation program transmits the access request to the second process adaptation program in the user space is not specifically limited in this specification.

For example, in a shown implementation, the first process adaptation program and the second process adaptation program can share a memory in the user space. In this case, the first process adaptation program can transmit the access request to the second process adaptation program in the user space through memory sharing.

Certainly, in addition to transmitting information in the user space through memory sharing, in practice, the first process adaptation program and the second process adaptation program can transmit information in the user space in another manner, for example, can transmit information by using a message queue or a socket or in another manner.

Referring back to FIG. 3, after obtaining the access request transmitted by the first process adaptation program in the user space, the second process adaptation program can further submit the access request to the second user-space process. For example, the access request can be submitted to the second user-space process in a cross-thread manner within the process.

After receiving the access request, the second user-space process can continue to execute the access request to perform access processing on the user-space file system.

For example, when the access request is the read request for the target file stored in the user-space file system, the second user-space process can continue to execute the read request to read the target file from the target-space file system. In this case, the access result generated by performing access processing on the user-space file system by the second user-space process is the target file read from the user-space file system.

In another example, when the access request is the write request for writing the target file into the user-space file system, the second user-space process can continue to execute the write request to write the target file into the target-space file system. In this case, the access result generated by performing access processing on the user-space file system by the second user-space process is a write result of writing the target file into the user-space file system.

It is worthwhile to note that a specific type of a file that needs to be written by the first user-space process into the user-space file system usually depends on a type of the computing task.

For example, if the computing task is the training task for performing model training on the LLM model, the file that needs to be written by the first user-space process into the user-space file system can be specifically a model snapshot generated at a specific time point in a process of performing model training on the LLM model. The model snapshot is usually used to describe a model state of the LLM model at the specific time point, and is also referred to as a checkpoint. The model snapshot usually can include a model parameter learned in a training process. If the computing task is the inference task for performing logical inference based on the LLM model, the file that needs to be written by the first user-space process into the user-space file system can be specifically an inference result generated by performing logical inference based on the LLM model.

Step 106: The second process adaptation program intercepts the access result generated by performing access processing on the user-space file system by the second user-space process, and transmits the access result to the first process adaptation program in the user space, and the first process adaptation program further submits the access result to the first user-space process, so that the first user-space process completes the computing task based on the access result.

Referring back to FIG. 3, in a process in which the second user-space process performs access processing on the user-space file system, the second process adaptation program can intercept the access result generated by performing access processing on the user-space file system by the second user-space process.

When the second process adaptation program intercepts the access result generated by performing access processing on the user-space file system by the second user-space process, a system function, in the system kernel, originally called by the second process adaptation program can be specifically replaced with a user-space function for implementation.

In a shown implementation, execution code running in the second user-space process usually can include a third function used to initiate a system call to the system kernel to return the access result for the user-space file system to the first user-space process. To enable the first user-space process to return the access result to the first user-space process without passing through the system kernel, the second process adaptation program can include a fourth function implemented to return the access result for the user-space file system to the first user-space process in the user space. For example, the third function can be a kernel-space callback function, and the fourth function can be a user-space callback function implemented in the second process adaptation program.

In this case, in the process in which the second user-space process performs access processing on the user-space file system, when the second process adaptation program detects that the second user-space process initiates a call to the third function during the execution, the third function can be replaced with the fourth function in response to the call initiated to the third function during the execution of the second user-space process, so that the second user-space process can further initiate a call to the fourth function, and submit the access result generated in the process of performing access processing on the user-space file system to the second process adaptation program as a call parameter, to complete interception of the access result generated by performing access processing on the user-space file system by the second user-space process.

Referring back to FIG. 3, after intercepting the access result generated by performing access processing on the user-space file system by the second user-space process, the second process adaptation program can further transmit the access request to the second process adaptation program in the user space.

In a shown implementation, after intercepting, by replacing the third function with the fourth function, the access result generated by performing access processing on the user-space file system by the second user-space process, the second process adaptation program can continue to execute the fourth function in the user space, and transmit the access result to the second process adaptation program in the user space.

It is worthwhile to note that a specific transmission manner used when the first process adaptation program transmits the access request to the second process adaptation program in the user space is not specifically limited in this specification.

For example, in a shown implementation, the second process adaptation program can alternatively transmit the access result to the first process adaptation program in the user space through memory sharing.

Referring back to FIG. 3, after obtaining the access result transmitted by the second process adaptation program in the user space, the first process adaptation program can further submit the access result to the first user-space process. For example, the access result can still be submitted to the first user-space process in the cross-thread manner within the process.

After receiving the access result, the first user-space process can continue to complete the computing task based on the access result.

For example, when the access request is the read request for the target file stored in the user-space file system, the access result generated by performing access processing on the user-space file system by the second user-space process is the target file read from the user-space file system. In this case, after receiving the target file, the first user-space process can continue to execute the computing task based on the target file.

In another example, when the access request is the write request for writing the target file into the user-space file system, the access result generated by performing access processing on the user-space file system by the second user-space process is a write result for writing the target file into the user-space file system.

In this case, after the first user-space process receives the write result, it indicates that execution of the computing task may be completed. In this case, a result indicating that execution of the computing task is completed can be directly returned.

In the above-mentioned technical solution, a process adaptation program is implemented in each of a user-space process corresponding to a computing task and a user-space process corresponding to a user-space file system mounted on a system kernel, so that when the user-space process corresponding to the computing task accesses the user-space file system, access interaction for the user-space file system can be completed in user space by using the implemented process adaptation program, and calls to the system kernel no longer need to be initiated. This can optimize an access link to the user-space file system, significantly reduce a quantity of calls to the system kernel, and lower system overheads, thereby improving access performance of accessing the user-space file system.

For example, the operating system mounted on the computing node is the Linux system. It is assumed that a default size of a single request that can be processed and that is supported by a system kernel of the Linux system is 128K, and the access request is a read request for a large file of a 128MB size stored in the user-space file system. If the link that is shown in FIG. 1 and that is used for accessing the user-space file system through the system kernel is used, the read request may need to be split into 1024 read sub-requests in the kernel after being transmitted to the Linux system kernel. All of the 1024 read requests pass through the system kernel, are processed for a plurality of times in the kernel space, are forwarded for a plurality of times, and then are sent to the user-space file system located in the user space, clearly resulting in excessively high system overheads.

If the optimized access link shown in FIG. 3 is used, the read request only needs to be transmitted to the user-space file system in the user space through memory sharing in the user space in one go, and does not need to pass through the system kernel, and the read request has no risk of being split. Clearly, this can significantly reduce a quantity of calls to the system kernel, and lower system overheads, thereby improving access performance of accessing the user-space file system.

Corresponding to the above-mentioned method embodiments, this specification further provides embodiments of an apparatus, an electronic device, and a storage medium.

FIG. 4 is a schematic structural diagram illustrating an electronic device, according to some example embodiments. Referring to FIG. 4, in terms of hardware, the device includes a processor 402, an internal bus 404, a network interface 406, a memory 408, and a nonvolatile memory 410, and certainly may further include other needed hardware. One or more embodiments of this specification can be implemented in a software-based way. For example, the processor 402 reads a corresponding computer program from the nonvolatile memory 410 into the memory 408, and then runs the computer program. Certainly, in addition to a software implementation, one or more embodiments of this specification do not exclude another implementation, for example, a logic device or a combination of hardware and software. That is, an execution body of the following processing procedure is not limited to each logical unit, and can be hardware or a logic device.

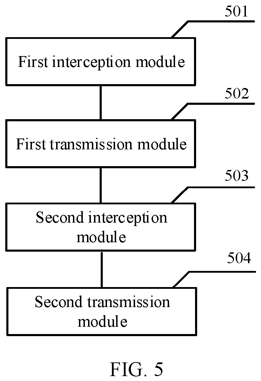

FIG. 5 is a block diagram illustrating a file access apparatus, according to some example embodiments of this specification. The apparatus can be applied to the electronic device shown in FIG. 4, to implement the technical solutions in this specification. The apparatus can be applied to a computing node for executing a computing task. A user-space file system that runs in user space is mounted on a system kernel of the computing node. The user-space file system is configured to store a file related to the computing task. A first process adaptation program is implemented in a first user-space process corresponding to the computing task. A second process adaptation program is implemented in a second user-space process corresponding to the user-space file system. The apparatus 500 includes: a first interception module 501, where the first process adaptation program intercepts an access request for the user-space file system triggered during the execution of the first user-space process; a first transmission module 502, where the first process adaptation program transmits the access request to the second process adaptation program in the user space in response to the intercepted access request, and the second process adaptation program further submits the access request to the second user-space process, so that the second user-space process executes the access request to perform access processing on the user-space file system; a second interception module 503, where the second process adaptation program intercepts an access result generated by performing access processing on the user-space file system by the second user-space process; and a second transmission module 504, where the second process adaptation program transmits the access result to the first process adaptation program in the user space, and the first process adaptation program further submits the access result to the first user-space process, so that the first user-space process completes the computing task based on the access result.

Correspondingly, this specification further provides an electronic device. The electronic device includes: a processor; and a storage, configured to store instructions executable by the processor. The processor is configured to implement the steps in all the above-mentioned method procedures.

Correspondingly, this specification further provides a computer-readable storage medium. The computer-readable storage medium stores executable computer program instructions. When the instructions are executed by a processor, the steps in all the above-mentioned method procedures are implemented.

Correspondingly, this specification further provides a computer program product. The computer program product stores executable computer program instructions. When the computer program instructions are executed by a processor, the steps in all the above-mentioned method procedures are implemented.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer independently performs programming to "integrate" a digital system to a PLD without requesting a chip manufacturer to design and manufacture an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. It should also be clear to a person skilled in the art that a hardware circuit that implements a logical method procedure can be readily obtained once the method procedure is logically programmed by using the several hardware description languages described above and is programmed into an integrated circuit.

A controller can be implemented in any suitable way. For example, the controller can be in a form such as a microprocessor, a processor, or a computer-readable medium, a logic gate, a switch, an application-specific integrated circuit (ASIC), a programmable logic controller, or an embedded microcontroller storing computer-readable program code (such as software or firmware) that can be executed by the (micro)processor. Examples of the controller include but are not limited to the following microcontrollers: ARC 625D, Atmel AT91SAM, Microchip PIC18F26K20, and Silicone Labs C2051F320. A storage controller can also be implemented as a part of control logic of a storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, the apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a server system. Certainly, with development of future computer technologies, a computer that implements a function of the above-mentioned embodiment can be, for example, a personal computer, a laptop computer, a vehicle-mounted man-machine interaction device, a cellular phone, a camera phone, a smartphone, a personal digital assistant, a media player, a navigation device, an e-mail device, a game console, a tablet computer, a wearable device, or a combination of any of these devices.

Although one or more embodiments of this specification provide the method operation steps described in the embodiments or flowcharts, more or fewer operation steps can be included based on conventional or non-creative means. A sequence of steps listed in an embodiment is merely one of various step execution sequences and does not indicate a sole execution sequence. In practice, when being executed by an apparatus or an end-user device product, the steps can be executed sequentially or in parallel (for example, by parallel processors or in a multi-thread processing environment, or even in a distributed data processing environment) based on the method shown in the embodiments or the accompanying drawings. The terms "include", "comprise", or any other variants thereof are intended to cover a non-exclusive inclusion, so that a process, a method, a product, or a device that includes a list of elements not only includes those elements but also includes other elements that are not expressly listed, or further includes elements inherent to such a process, method, product, or device. Without more constraints, the existence of additional identical or equivalent elements in the process, method, product or device that includes the elements is not excluded. For example, if words such as first and second are used to represent names, they do not represent any particular sequence.

For ease of description, the above-mentioned apparatuses are described separately by dividing functions into various modules. Certainly, during implementation of one or more embodiments of this specification, the functions of the modules can be implemented in same one or more pieces of software and/or hardware, or modules implementing a same function can be implemented by using a combination of a plurality of sub-modules or sub-units, etc. The described apparatus embodiments are merely examples. For example, division into the units is merely logical function division and there can be other division manners in actual implementation. For example, a plurality of units or components can be combined or integrated into another system, or some features may be ignored or not performed. In addition, the displayed or discussed mutual couplings or direct couplings or communication connections can be implemented by using some interfaces. The indirect couplings or communication connections between the apparatuses or units can be implemented in electronic, mechanical, or other forms.

The present invention is described with reference to the flowcharts and/or block diagrams of the method, the apparatus (system), and the computer program product according to the embodiments of the present invention. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

Alternatively, these computer program instructions can be stored in a computer-readable storage that can instruct a computer or another programmable data processing device to work in a specific manner, so that the instructions stored in the computer-readable storage generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPUs), one or more input/output interfaces, one or more network interfaces, and one or more memories.

The memory can include a form such as a non-persistent memory, a random access memory (RAM), or a nonvolatile memory in a computer-readable medium, for example, a read-only memory (ROM) or a flash memory (flash RAM). The memory is an example of the computer-readable medium.

The computer-readable medium includes persistent, non-persistent, removable and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, a graphene storage, another magnetic storage device, or any other non-transmission medium. The computer storage medium can be configured to store information that can be accessed by a computing device. Based on the definition in this specification, the computer-readable medium does not include transitory media such as a modulated data signal and carrier.

A person skilled in the art should understand that one or more embodiments of this specification can be provided as methods, systems, or computer program products. Therefore, the one or more embodiments of this specification can use a form of hardware only embodiments, software only embodiments, or embodiments with a combination of software and hardware. In addition, the one or more embodiments of this specification can use a form of a computer program product that is implemented on one or more computer-usable storage media (including but not limited to a disk storage, a CD-ROM, an optical storage, etc.) that include computer-usable program code.

The one or more embodiments of this specification can be described in the general context of computer-executable instructions, for example, a program module. Usually, the program module includes a routine, a program, an object, a component, a data structure, etc. for executing a specific task or implementing a specific abstract data type. The one or more embodiments of this specification can alternatively be practiced in distributed computing environments. In the distributed computing environments, tasks are executed by remote processing devices that are connected through a communication network. In the distributed computing environments, the program module can be located in both local and remote computer storage media including storage devices.

The embodiments of this specification are described in a progressive manner. For same or similar parts in the embodiments, mutual references can be made to the embodiments. Each embodiment focuses on a difference from other embodiments. Particularly, the system embodiments are basically similar to the method embodiments, and therefore are described briefly. For related parts, references can be made to some descriptions in the method embodiments. In the descriptions of this specification, descriptions of reference to terms such as "an embodiment", "some embodiments", "an example", "a specific example", or "some examples" mean that specific features, structures, materials, or characteristics described with reference to the embodiment or example are included in at least one embodiment or example of this specification. In this specification, illustrative expressions of the above-mentioned terms are not necessarily intended for the same embodiment or example. In addition, the described specific feature, structure, material, or characteristic can be combined in a proper manner in any one or more embodiments or examples. Moreover, a person skilled in the art can combine and associate different embodiments or examples and features of different embodiments or examples described in this specification, provided that the embodiments or examples and the features do not conflict with each other.

The above-mentioned descriptions are merely embodiments of the one or more embodiments of this specification, and are not intended to limit the one or more embodiments of this specification. A person skilled in the art knows that one or more embodiments of this specification can have various modifications and changes. Any modifications, equivalent replacements, improvements, etc. made without departing from the spirit and principle of this specification shall fall within the scope of the claims.

### EXAMPLES

1. A file access method, applied to a computing node for executing a computing task, wherein a user-space file system that runs in user space is mounted on a system kernel of the computing node; the user-space file system is configured to store a file related to the computing task; a first process adaptation program is implemented in a first user-space process corresponding to the computing task; a second process adaptation program is implemented in a second user-space process corresponding to the user-space file system; and the method comprises:
   intercepting, by the first process adaptation program, an access request for the user-space file system triggered during the execution of the first user-space process;
   transmitting, by the first process adaptation program, the access request to the second process adaptation program in the user space in response to the intercepted access request, and further submitting, by the second process adaptation program, the access request to the second user-space process, so that the second user-space process executes the access request to perform access processing on the user-space file system; and
   intercepting, by the second process adaptation program, an access result generated by performing access processing on the user-space file system by the second user-space process, and transmitting the access result to the first process adaptation program in the user space, and further submitting, by the first process adaptation program, the access result to the first user-space process, so that the first user-space process completes the computing task based on the access result.
2. The method according to example 1, wherein execution code running in the first user-space process comprises a first function used to initiate a system call to the system kernel to access the user-space file system; and correspondingly, the first process adaptation program comprises a second function used to access the user-space file system in the user space;
   the intercepting, by the first process adaptation program, an access request for the user-space file system triggered during the execution of the first user-space process comprises:
   replacing the first function with the second function in response to a call initiated to the first function during the execution of the first user-space process, so that the first user-space process further initiates a call to the second function, and submits the access request for the user-space file system triggered during the execution to the first process adaptation program as a call parameter; and
   the transmitting, by the first process adaptation program, the access request to the second process adaptation program in the user space comprises:
      executing, by the first process adaptation program, the second function, and transmitting the access request to the second process adaptation program in the user space.
3. The method according to example 1, wherein execution code running in the second user-space process comprises a third function used to initiate a system call to the system kernel to return the access result for the user-space file system to the first user-space process; and correspondingly, the second process adaptation program comprises a fourth function used to return the access result for the user-space file system to the first user-space process in the user space;
   the intercepting, by the second process adaptation program, an access result generated by performing access processing on the user-space file system by the second user-space process comprises:
   replacing the third function called by the second user-space process with the fourth function in response to that the second user-space process calls the third function during the execution, so that the second user-space process further initiates a call to the fourth function, and submits the access result generated by performing access processing on the user-space file system to the second process adaptation program as a call parameter; and
   the transmitting, by the second process adaptation program, the access result to the first process adaptation program in the user space comprises:
   executing, by the second process adaptation program, the fourth function, and transmitting the access result to the first process adaptation program in the user space.
4. The method according to example 1, wherein the transmitting, by the first process adaptation program, the access request to the second process adaptation program in the user space comprises:
   transmitting, by the first process adaptation program, the access request to the second process adaptation program in the user space through memory sharing; and
   the transmitting, by the second process adaptation program, the access result to the first process adaptation program in the user space comprises:
      transmitting, by the second process adaptation program, the access result to the first process adaptation program in the user space through memory sharing.
5. The method according to example 1, wherein the access request comprises a read request for a target file stored in the user-space file system; and correspondingly, the access result comprises the target file read from the user-space file system; or
   the access request comprises a write request for writing a target file into the user-space file system; and correspondingly, the access result comprises a write result of writing the target file into the user-space file system.
6. The method according to example 1, wherein the file stored in the user-space file system is a file block comprising several files.
7. The method according to example 1, wherein the user-space file system is connected to a storage system configured to store the file related to the computing task; and an RDMA connection is established between the user-space file system and the storage system; and
   the method further comprises:
   synchronizing the file related to the computing task from the storage system to the user-space file system for storage based on the RDMA connection before the computing node executes the computing task.
8. The method according to example 1, wherein an operating system used by the computing node is a Linux system; and the process adaptation program is an adaptor implemented in the user-space process based on an LD_PRELOAD mechanism supported by the Linux system.
9. The method according to example 1, wherein the user-space file system is a user-space file system created based on a libfuse library provided by a Linux system; and the user-space file system is mounted to the Linux system by using a FUSE kernel module of the Linux system.
10. The method according to example 1, wherein the computing task is a training task for training an LLM model or an inference task for performing logical inference based on an LLM model.
11. The method according to example 1, wherein the user-space file system is a file system implemented based on a flash memory mounted on the computing node.
12. The method according to example 11, wherein the user-space file system is a distributed file system implemented based on flash memories mounted on computing nodes for jointly executing the computing task in a computing node cluster.
13. A file access apparatus, applied to a computing node for executing a computing task, wherein a user-space file system that runs in user space is mounted on a system kernel of the computing node; the user-space file system is configured to store a file related to the computing task; a first process adaptation program is implemented in a first user-space process corresponding to the computing task; a second process adaptation program is implemented in a second user-space process corresponding to the user-space file system; and the apparatus comprises:
   a first interception module, wherein the first process adaptation program intercepts an access request for the user-space file system triggered during the execution of the first user-space process;
   a first transmission module, wherein the first process adaptation program transmits the access request to the second process adaptation program in the user space in response to the intercepted access request, and the second process adaptation program further submits the access request to the second user-space process, so that the second user-space process executes the access request to perform access processing on the user-space file system;
   a second interception module, wherein the second process adaptation program intercepts an access result generated by performing access processing on the user-space file system by the second user-space process; and
   a second transmission module, wherein the second process adaptation program transmits the access result to the first process adaptation program in the user space, and the first process adaptation program further submits the access result to the first user-space process, so that the first user-space process completes the computing task based on the access result.
14. A computer device, comprising a storage, a processor, and a computer program that is stored in the storage and that is capable of running on the processor, wherein when the processor executes the computer program, the steps of the method according to any one of examples 1 to 12 are implemented.
15. A computer-readable storage medium, wherein the computer-readable storage medium stores a computer program, and when the computer program is executed by a processor, the steps of the method according to any one of examples 1 to 12 are implemented.
16. A computer program product, comprising a computer program, wherein when the computer program is executed by a processor, the steps of the method according to any one of examples 1 to 12 are implemented.

## Claims

1. A file access method performed by a computing node, wherein the file access method is for executing a computing task, wherein a user-space file system that runs in user space is mounted on a system kernel of the computing node, wherein the user-space file system is configured to store a file related to the computing task, wherein a first process adaptation program is implemented in a first user-space process corresponding to the computing task, wherein a second process adaptation program is implemented in a second user-space process corresponding to the user-space file system, wherein the method comprises:
intercepting, by the first process adaptation program, an access request for the user-space file system triggered during execution of the first user-space process;
transmitting, by the first process adaptation program, the access request to the second process adaptation program in the user space in response to the intercepted access request, and further submitting, by the second process adaptation program, the access request to the second user-space process, so that the second user-space process executes the access request to perform access processing on the user-space file system; and
intercepting, by the second process adaptation program, an access result generated by performing access processing on the user-space file system by the second user-space process, and transmitting the access result to the first process adaptation program in the user space, and further submitting, by the first process adaptation program, the access result to the first user-space process, so that the first user-space process completes the computing task based on the access result.

2. The method according to claim 1, wherein execution code running in the first user-space process comprises a first function used to initiate a system call to the system kernel to access the user-space file system, wherein the first process adaptation program comprises a second function used to access the user-space file system in the user space,
wherein intercepting, by the first process adaptation program, the access request for the user-space file system triggered during the execution of the first user-space process comprises:
replacing the first function with the second function in response to a call initiated to the first function during the execution of the first user-space process, so that the first user-space process further initiates a call to the second function, and submits the access request for the user-space file system triggered during the execution to the first process adaptation program as a call parameter and
wherein transmitting, by the first process adaptation program, the access request to the second process adaptation program in the user space comprises:
executing, by the first process adaptation program, the second function, and transmitting the access request to the second process adaptation program in the user space.

3. The method according to claim 1 or claim 2, wherein execution code running in the second user-space process comprises a third function used to initiate a system call to the system kernel to return the access result for the user-space file system to the first user-space process; and wherein the second process adaptation program comprises a fourth function used to return the access result for the user-space file system to the first user-space process in the user space;
wherein intercepting, by the second process adaptation program, the access result generated by performing the access processing on the user-space file system by the second user-space process comprises:
replacing the third function called by the second user-space process with the fourth function in response to that the second user-space process calls the third function during the execution, so that the second user-space process further initiates a call to the fourth function, and submits the access result generated by performing access processing on the user-space file system to the second process adaptation program as a call parameter; and
wherein transmitting, by the second process adaptation program, the access result to the first process adaptation program in the user space comprises:
executing, by the second process adaptation program, the fourth function, and transmitting the access result to the first process adaptation program in the user space.

4. The method according to any one of the preceding claims, wherein the transmitting, by the first process adaptation program, the access request to the second process adaptation program in the user space comprises:
transmitting, by the first process adaptation program, the access request to the second process adaptation program in the user space through memory sharing,
wherein transmitting, by the second process adaptation program, the access result to the first process adaptation program in the user space comprises:
transmitting, by the second process adaptation program, the access result to the first process adaptation program in the user space through memory sharing.

5. The method according to any one of the preceding claims, wherein the access request comprises a read request for a target file stored in the user-space file system, wherein the access result comprises the target file read from the user-space file system; or
the access request comprises a write request for writing a target file into the user-space file system, wherein the access result comprises a write result of writing the target file into the user-space file system.

6. The method according to any one of the preceding claims, wherein the file stored in the user-space file system is a file block comprising several files.

7. The method according to any one of the preceding claims, wherein the user-space file system is connected to a storage system configured to store the file related to the computing task, wherein an RDMA connection is established between the user-space file system and the storage system,
wherein the method further comprises:
synchronizing the file related to the computing task from the storage system to the user-space file system for storage based on the RDMA connection before the computing node executes the computing task.

8. The method according to any one of the preceding claims, wherein an operating system used by the computing node is a Linux system, and wherein the first process adaptation program is an adaptor implemented in the first user-space process based on an LD _PRELOAD mechanism supported by the Linux system.

9. The method according to any one of the preceding claims, wherein the user-space file system is a user-space file system created based on a libfuse library provided by a Linux system; and the user-space file system is mounted to the Linux system by using a FUSE kernel module of the Linux system.

10. The method according to any one of the preceding claims, wherein the computing task is a training task for training an LLM model or an inference task for performing logical inference based on an LLM model.

11. The method according to any one of the preceding claims, wherein the user-space file system is a file system implemented based on a flash memory mounted on the computing node, optionally wherein the user-space file system is a distributed file system implemented based on flash memories mounted on computing nodes for jointly executing the computing task in a computing node cluster.

12. A file access apparatus executed on pa computing node for executing a computing task, wherein a user-space file system that runs in user space is mounted on a system kernel of the computing node, wherein the user-space file system is configured to store a file related to the computing task, wherein a first process adaptation program is implemented in a first user-space process corresponding to the computing task, wherein a second process adaptation program is implemented in a second user-space process corresponding to the user-space file system, wherein the apparatus comprises:
a first interception module, a first transmission module, a second interception module, and a second transmission module, wherein the modules are configured to perform the method of any one of claims 1 to 11.

13. A computer device, comprising a storage, a processor, and a computer program that is stored in the storage and that is capable of running on the processor, wherein when the processor executes the computer program, the method according to any one of claims 1 to 11 is performed.

14. A computer-readable storage medium, wherein the computer-readable storage medium stores a computer program, and when the computer program is executed by a processor, the method according to any one of claims 1 to 11 is performed.

15. A computer program product, comprising a computer program, wherein when the computer program is executed by a processor, the method according to any one of claims 1 to 11 is performed.
